# EUROPÄISCHE PATENTSCHRIFT

(11) **EP 0 600 260 B1**
(45) Veröffentlichungstag und Bekanntmachung des Hinweises auf die Patenterteilung: **12.07.1995**
(21) Anmeldenummer: 93118043.4
(22) Anmeldetag: 08.11.1993
(51) Int. Cl.: C01B 15/013

(54) **Verfahren zur Verringerung des Kohlenstoffgehalts wässriger Wasserstoffperoxidlösungen**
Process for reducing the carbon content in aqueous hydrogen peroxide solutions
Procédé pour abaisser la teneur en carbone de solutions aqueuses d'eau oxygénée

(30) Priorität: 01.12.1992 DE 4240370
(43) Veröffentlichungstag der Anmeldung: 08.06.1994
(73) Patentinhaber: Degussa Aktiengesellschaft, 60311 Frankfurt (DE)
(72) Erfinder: Zimmer, Gerhard, Dr., D-61462 Königstein (DE); Kinz, Heike, D-63457 Hanau (DE); Sextl Elfriede, Dr., D-63826 Geiselbach (DE)

(56) Entgegenhaltungen:
- EP-A- 0 502 466
- DE-A- 3 822 348
- US-A- 4 985 228

## Beschreibung

Die Erfindung betrifft ein Verfahren zur Verringerung des Kohlenstoffgehalts wäßriger Wasserstoffperoxidlösungen. Das Verfahren richtet sich insbesondere auf wäßrige Wasserstoffperoxidlösungen, wie sie im Rahmen des sogenannten Anthrachinonverfahrens zur Herstellung von Wasserstoffperoxid erhalten werden.

Wasserstoffperoxid kann in verschiedener Weise hergestellt werden, jedoch ist der Anthrachinon-Kreisprozeß der technisch bedeutsamste. Wie aus Ullmann's Encyclopedia of Industrial Chemistry Vol. A13, 5th ed. (1989), Seiten 447-457, hervorgeht, umfaßt dieser Kreisprozeß eine Hydrierung eines Alkylanthrachinons in einem mit Wasser nicht beziehungsweise nur begrenzt mischbaren organischen Lösungsmittel beziehungsweise -gemisch, eine Oxidation des gebildeten Alkylanthrahydrochinons unter Bildung von Wasserstoffperoxid und Rückbildung des Alkylanthrachinons, eine Extraktion des Wasserstoffperoxids mit Wasser und diverse, von der gewünschten H₂O₂-Qualität abhängige Stufen zur Reinigung der wäßrigen H₂O₂-Lösungen.

Prozeßbedingt enthält die bei der Extraktion erhaltene H₂O₂-Lösung flüchtige und nicht-flüchtige Kohlenstoffverbindungen. Um den Qualitätsanforderungen gerecht zu werden, sind unterschiedliche Verfahren zur Erniedrigung des Kohlenstoffgehalts (C-Gehalts) bekannt geworden.

Der C-Gehalt des wäßrigen H₂O₂-Extrakts läßt sich beispielsweise mittels extraktiver Maßnahmen reduzieren - siehe beispielsweise GB-Patentschrift 841 323 -, derartige Verfahren sind jedoch aufwendig, und der damit erreichbare Rest-C-Gehalt entspricht im allgemeinen nicht den an qualitativ hochwertige H₂O₂-Lösungen gestellten Anforderungen. Eine vereinfachte und verbesserte Methode wird in der US-Patentschrift 4,759,921 gelehrt, wobei der Rest-C-Gehalt einer wäßrigen H₂O₂-Lösung um 100 bis 120 mg/l abgesenkt wird durch Phasentrennung eines Gemischs aus dem H₂O₂-Extrakt mit 0,5 bis 5 Gew.-% eines Chinonlösers mittels eines speziellen Coalescers.

Flüchtige C-Verbindungen lassen sich zwar während einer Aufkonzentrierung des H₂O₂-Extrakts zum Teil abtrennen, das Produkt enthält aber immer noch einen für viele Zwecke zu hohen Rest-C-Gehalt.

Aus der US-Patentschrift 2,919,975 ist ein Verfahren zur Erniedrigung des Kohlenstoffgehalts wäßriger H₂O₂-Lösungen bekannt, das eine destillative Konzentrierung, eine Behandlung des zuvor verdünnten Konzentrats mit einer Aktivkohle bei unterhalb 10 ^{o}C und die Abtrennung der mit adsorbierten Kohlenstoffverbindungen beladenen Aktivkohle umfaßt.

Nachteilig an diesem Verfahren ist, daß nur ausgewählte, gegebenenfalls in spezieller Weise vorbehandelte Aktivkohletypen einsetzbar sind, die an Kohlenstoff abgereicherte H₂O₂-Lösung gegebenenfalls einen zusätzlichen Konzentrierungsschritt nach sich zieht, die Adsorptionsbehandlung wegen der erforderlichen Abkühlung energieaufwendig ist und die beladene Aktivkohle nicht oder nur sehr aufwendig regeneriert werden kann. Eine Weiterentwicklung der Adsorption von in Wasserstoffperoxidlösungen enhaltenen C-Verbindungen an Aktivkohle lehrt die US-PS 4,985,228, die oben aufgezeigten Nachteile werden jedoch nicht behoben.

Gemäß dem Verfahren der US-Patentschrift 3,305,314 wird zur Verringerung des C-Gehalts von wäßrigen H₂O₂-Lösungen die H₂O₂-Lösung mit einem Anionenaustauscher, vorzugsweise einem stark basischen Ionenaustauscher mit quaternären Ammoniumgruppen in Form eines Salzes einer schwächeren Säure als Essigsäure behandelt. Mit diesem Verfahren lassen sich zwar anionische C-Verbindungen abtrennen, kaum aber neutrale und gar keine kationische C-Verbindungen. Die Verwendung eines Ionenaustauschers ist aus sicherheitstechnischer Sicht nicht unproblematisch und die Regenerierung zieht einen erheblichen technischen Aufwand nach sich, um behördliche Abwasserauflagen zu erfüllen.

Bekannt ist auch, den Kohlenstoffgehalt unter Verwendung organischer Adsorberharze mit makroporöser Struktur zu reduzieren - siehe ES-A 547 571/6. Nachteilig an diesen Harzen ist insbesondere der erhebliche Aufwand bei der Regenerierung: Nach dem Spülen des Harzes mit Wasser muß dieses mit einem organischen Lösungsmittel behandelt und anschließend das Lösungsmittel wieder durch Wasser verdrängt werden. Außer Lösungsmittelverlusten kommt es zu einem Abwasseranfall, der entsorgt werden muß.

Wie zuvor dargestellt, befriedigen die vorbekannten Verfahren zur Reduzierung des C-Gehalts wäßriger H₂O₂-Lösungen noch nicht vollständig, so daß ein Interesse an verbesserten und/oder neuartigen Verfahren bestand.

Aufgabe der vorliegenden Erfindung ist die Bereitstellung eines weiteren Verfahrens zur Verringerung des Kohlenstoffgehalts wäßriger Wasserstoffperoxidlösungen durch Kontaktieren derselben mit einem festen Adsorptionsmittel und anschließendes Abtrennen des beladenen Adsorptionsmittels. Das Adsorptionsmittel sollte nicht nur eine gute Wirksamkeit bezüglich der C-Reduzierung aufweisen, sondern auch auf Wasserstoffperoxid möglichst nicht zersetzend wirken; zusätzlich sollte das Adsorptionsmittel in sicherheitstechnischer Hinsicht unbedenklich sein und sich einfach regenerieren lassen.

Gefunden wurde, daß die erfindungsgemäße Aufgabe dadurch gelöst wird, daß als festes Adsorptionsmittel ein Zeolith aus der Reihe dealuminierter H-Y-Zeolithe mit einem Modul (SiO₂/Al₂O₃) von gleich oder größer 20 oder H-Mordenite mit einem Modul von mindestens 20 verwendet wird.

Der Buchstabe H in dem zu verwendenden dealuminierten H-Y-Zeolith beziehungsweise H-Mordenit zeigt in für Zeolithe üblicher Weise an, daß es sich im wesentlichen um die protonierte Form des Zeoliths handelt. Vorzugsweise werden dealuminierte H-Y-Zeolithe mit einem Modul von größer 50, insbesondere größer 100, verwendet.

Zur Dealuminierung von Y-Zeolithen sind unterschiedliche Verfahren bekannt (siehe H.K. Beyer und Ita Belenykaja in "Catalysis by Zeolites", ed by B. Imelik (1980), Seiten 203-210), insbesondere solche unter Verwendung von Siliciumtetrachlorid, welche in der ersten Stufe im allgemeinen bei einer Temperatur um 400 ^{o}C durchgeführt werden, und solche unter Verwendung von Wasserdampf. Dealuminierte H-Y-Zeolithe des erstgenannten Verfahrens werden im erfindungsgemäßen Verfahren bevorzugt, weil sie weniger Fehlstellen aufweisen als Produkte des zweitgenannten Verfahrens.

Zur Durchführung des erfindungsgemäßen Verfahrens kann die wäßrige Wasserstoffperoxidlösung batchweise oder kontinuierlich mit einem erfindungsgemäßen Zeolithen behandelt werden. Hierbei kann der Zeolith in der zu behandelnden Wasserstoffperoxidlösung suspendiert werden; die Abtrennung des Zeolithen nach der Behandlung kann mittels bekannter Methoden zur Fest-Flüssig-Phasentrennung erfolgen. Im Falle einer kontinuierlichen Durchführung des Verfahrens ist es zweckmäßig, einer in einem Umlaufreaktor befindlichen Suspension kontinuierlich zu behandelnde Wasserstoffperoxidlösung zuzuführen und behandelte Lösung über eine im Kreislauf des Umlaufreaktors angeordnete Fest-Flüssig-Trennvorrichtung, wie etwa eine Querstromfiltrationseinrichtung, abzuziehen. Gemäß einer alternativen Behandlungsmethode wird der Zeolith in einem Festbettreaktor angeordnet, über welchen die zu behandelte Lösung ein- oder mehrfach geleitet wird.

Während bei der Behandlung in der Suspension vorzugsweise pulverförmiger Zeolith verwendet wird, kann im Falle der Ausführungsform mit einem Festbett pulverförmier oder geformter Zeolith, beispielsweise als Zylinder oder Hohlzylinder, eingesetzt werden.

Üblicherweise wird das erfindungsgemäße Verfahren bei einer Temperatur im Bereich von 10 bis 30 ^{o}C durchgeführt. Es können beliebig konzentrierte, also auch konzentrierte Wasserstoffperoxidlösungen, erfindungsgemäß behandelt werden. Bei Verwendung der erfindungsgemäßen Zeolithe kommt es während der Behandlung praktisch zu keiner Wasserstoffperoxidzersetzung. Demgegenüber erwiesen sich zahlreiche andere Zeolithe, einschließlich der für Adsorptionszwecke bekannten Zeolithe vom ZSM-5-Typ als katalytisch wirksam, das heißt, es kommt bereits nach der Zugabe des Zeoliths oder während beziehungsweise nach der Behandlung der Wasserstoffperoxidlösung zur Blasenbildung, ein Indiz für die Zersetzung von Wasserstoffperoxid.

Die erfindungsgemäß zu verwendenden Zeolithe lassen sich nach vollständiger Beladung in einfacher Weise regenerieren. Die Regenerierung kann entweder durch Calcinieren bei einer Temperatur bis 1000 ^{o}C erfolgen, wobei die organischen Bestandteile verbrennen. Auch naßchemische oxidative Verfahren können zur Regenerierung herangezogen werden, da die erfindungsgemäß zu verwendenden Zeolithe gegen starke Oxidationsmittel, wie beispielsweise Caro'sche Säure, stabil sind.

Es war nicht vorhersehbar, daß es möglich ist, unter Verwendung speziell ausgewählter Zeolithe den Kohlenstoffgehalt mittels einer einfachen Behandlungsmethode ohne katalytische Zersetzung des Wasserstoffperoxids zu verringern. Andere als die erfindungsgemäß zu verwendenden Zeolithe erwiesen sich nämlich als katalytisch wirksam, so daß sie trotz gegebenenfalls ausreichender Adsorptionseigenschaften für den erfindungsgemäßen Zweck ungeeignet sind. Die erfindungsgemäß zu verwendenden Zeolithe weisen nicht nur eine gute Wirksamkeit auf, sondern erlauben auch eine hohe spezifische Beladung mit in der wäßrigen Wasserstoffperoxidlösung enthaltenen Kohlenstoffverbindungen. Aufgrund ihrer anorganischen Struktur lassen sich die Zeolithe in einfacher Weise ohne Abwasseranfall regenerieren; sofern erwünscht, ist aber auch eine naßchemische Regenerierung, etwa eine solche unter Verwendung von Oxidationsmitteln möglich. Zusätzlich zu den Kohlenstoffverbindungen werden auch neutrale und kationische anorganische Verbindungen bei der erfindungsgemäßen Behandlung zumindest teilweise abgetrennt.

### Beispiel 1

Bestimmung des Adsorptionsgleichgewichts von Wessalith® DAY (= dealuminierter Y-Zeolith mit Modul 200, H-Form; Firma Degussa AG - Technische Information Nr. 4307.0 / Juni 1991).

50 ml 70 gew.-%ige wäßrige H₂O₂-Lösung mit einem Gesamt-C-Gehalt (TC) von 383 mg/l wurden mit 5 g DAY-Zeolith vesetzt und in einem Erlenmeyer-Kolben geschüttelt. Die Referenzprobe enthielt keinen Zeolith. Die Ergebnisse folgen aus der Tabelle:

| Zeit (h) | Referenzprobe TC *) (mg/l) | mit DAY-Zeolith | |
|---|---|---|---|
| | | TC (mg/l) | Beladung mg TC/g DAY (atro) |
| 0,5 | n.b. | 87 | 2,6 |
| 2 | n.b. | 80 | 3,0 |
| 8 | n.b. | 74 | 2,8 |
| 24 | 384 | 80 | 2,8 |
| n.b. = nicht bestimmt atro = absolut trocken | | | |

| | | | |
|---|---|---|---|
| *) Der Gehalt an anorganischem Kohlenstoff (TIC) lag unter der analytisch erfaßbaren Grenze von gleich/kleiner 3 mg/l. Der Gesamt-C-Gehalt (TC) entspricht somit im wesentlichen dem organischen Kohlenstoff (TOC), der zur Bestimmung herangezogen wurde. | | | |

Der Kohlenstoffgehalt wurde um etwa 300 mg/l reduziert. Das Adsorptionsgleichgewicht ist nach spätestens einer Stunde erreicht.

### Beispiele 2-4 und Vergleichsbeispiele 1-3

Behandlung von 70 gew.-%iger H₂O₂-Lösung mit verschiedenen Zeolithen.

25 g Zeolith-Pulver wurden in einen 500 ml-Erlenmeyerkolben eingewogen, mit 250 ml H₂O₂-Lösung versetzt und 2 h geschüttelt. Danach wurde zentrifugiert und die H₂O₂-Lösung analysiert. Der Tabelle sind die Zeolithtypen und das Ergebnis bezüglich der Zersetzung des Wasserstoffperoxids zu entnehmen.

| Beispiel Nr. | Zeolith-Typ (Modul) | Zersetzung (Blasenbildung) |
|---|---|---|
| 2 | DAY (200) | keine |
| 3 | H-Mordenit (20) | sehr geringe Zersetzung nach der Abtrennung des Zeoliths |
| 4 | H-Y (56) | |

| Vergleichsbeispiel | | |
|---|---|---|
| V 1 | H-ZSM-5 (45) | stark, Aufschäumen bereits zu Beginn |
| V 2 | Na-ZSM-5 (45) | mittel, Blasenbildung an den Zeolithteilchen |
| V 3 | H-ZSM-5 (1000) | |

### Beispiele 5 und 6

Behandlung von 70 und 50 gew.-%iger H₂O₂-Lösung mit DAY-Zeolith (H-Form, Modul 200). Jeweils 25 g Zeolith und 250 ml H₂O₂-Lösung wurden 2 h geschüttelt; die behandelte H₂O₂-Lösung und die Beladung des Zeoliths wurden nach der Phasentrennung durch Zentrifugieren bestimmt; zu Vergleichszwecken wurde jeweils eine Probe ohne Zeolith 2 h geschüttelt. Die Ergebnisse folgen aus der Tabelle.

| Beispiel Nr. | Kohlenstoffgehalt (TC) (mg/l) | Beladung mg TC/g Zeolith (atro) |
|---|---|---|
| 5 | 95 | 2,8 |
| Referenzprobe | 390 | - |
| 6 | 44 | 1,5 |
| Referenzprobe | 200 | - |

## Patentansprüche

1. Verfahren zur Verringerung des Kohlenstoffgehalts wäßriger Wasserstoffperoxidlösungen durch Kontaktieren derselben mit einem festen Adsorptionsmittel und anschließendes Abtrennen des beladenen festen Adsorptionsmittels,
dadurch gekennzeichnet,
daß als festes Adsorptionsmittel ein Zeolith aus der Reihe dealuminierter H-Y-Zeolithe mit einem Modul (SiO₂/Al₂O₃) von gleich oder größer 20 oder H-Mordenite mit einem Modul von mindestens 20 verwendet wird.

2. Verfahren nach Anspruch 1,
dadurch gekennzeichnet,
daß man einen dealuminierten H-Y-Zeolith mit einem Modul von größer 50, vorzugsweise größer 100, verwendet.

3. Verfahren nach Anspruch 2,
dadurch gekennzeichnet,
daß man einen dealuminierten H-Y-Zeolith mit einem Modul von größer 150, deren Herstellung eine Gasphasen-Dealuminierung eines Y-Zeoliths mit Siliciumtetrachlorid umfaßt, verwendet.

## Claims

1. A process for reducing the carbon content of aqueous hydrogen peroxide solutions by placing the same in contact with a solid adsorption agent and then separating the loaded solid adsorption agent,
characterised in that
a zeolite from the set of dealuminised H-Y-zeolites with a (SiO₂/Al₂O₃) modulus equal to or greater than 20 or H mordenite with a modulus of at least 20 is used as the solid adsorption agent.

2. A process according to Claim 1,
characterised in that
a dealuminised H-Y-zeolite with a modulus greater than 50, preferably greater than 100, is used.

3. A process according to Claim 2,
characterised in that
a dealuminised H-Y-zeolite with a modulus greater than 150, whose preparation includes gas-phase dealuminisation of a Y-zeolite with silicon tetrachloride, is used.

## Revendications

1. Procédé pour abaisser la teneur en carbone de solutions aqueuses de peroxyde d'hydrogène par mise en contact de celles-ci avec un adsorbant solide et séparation consécutive de l'adsorbant solide chargé, caractérisé en ce qu'on utilise comme adsorbant solide une zéolithe de la série des zéolithes Y-H désaluminisées présentant un module (SiO₂/Al₂O₃) égal ou supérieur à 20 ou de la mordénite H présentant un module d'au moins 20.

2. Procédé selon la revendication 1, caractérisé en ce qu'on utilise une zéolithe Y-H désaluminisée présentant un module supérieur à 50, de préférence supérieur à 100.

3. Procédé selon la revendication 2, caractérisé en ce qu'on utilise une zéolithe Y-H présentant un module supérieur à 150 dont la fabrication comprend une désaluminisation en phase gazeuse d'une zéolithe Y à l'aide de tétrachlorure de silicium.
